# EUROPEAN PATENT APPLICATION

(11) **EP 2 685 548 A1**
(43) Date of publication of application: **15.01.2014**
(21) Application number: 12757733.6
(22) Date of filing: 07.03.2012
(51) Int. Cl.: H01M 10/50, B60K 1/04, H01M 2/10, H05B 3/20, B60L 11/18

(54) **VEHICLE BATTERY**

(30) Priority: 11.03.2011 JP 2011054091; 13.02.2012 JP 2012028464
(71) Applicant: Nissan Motor Co., Ltd, Yokohama-shi, Kanagawa 221-0023 (JP)
(72) Inventor: KINOSHITA, Yukiko, Kanagawa 243-0123 (JP); TODOROKI, Naoto, Kanagawa 243-0123 (JP)
(74) Representative: Hoefer & Partner
(86) International application number: PCT/JP2012/055836
(87) International publication number: WO 2012/124568

(57) **Abstract**

In a vehicle battery of the invention, a second battery module (13C) and another battery module having a greater height than the second battery module (13C) are placed below a floor panel (8) of a vehicle and adjacent to each other in a front-rear direction of the vehicle. Thin heater modules (22, 23) configured to heat the second battery module (13C) are provided in front of and behind the second battery module (13C) in the front-rear direction of the vehicle.

## Description

### TECHNICAL FIELD

The present invention relates to a vehicle battery including a battery module and a thin heater module.

### BACKGROUND ART

A vehicle battery described in Patent Document 1 has heretofore been known as a vehicle battery including a thin heater module, for example.

In the thin heater module described in Patent Document 1, a heater body is in intimate contact with an outer side surface of a case of a battery pack which houses numerous battery modules. Then, a heat insulation sheet body is interposed between the heater body and a heater unit case which faces the heater body.

### PRIOR ART DOCUMENT

### PATENT DOCUMENT

Patent Document 1: Japanese Patent Application Publication No. 2008-186621

### SUMMARY OF INVENTION

However, the thin heater module described in Patent Document 1 is configured to heat the case of the battery pack with the heater body and to heat the battery modules indirectly by heat conduction from the case of the battery pack to the battery modules. For this reason, there has been a problem of poor efficiency of heating the battery modules.

An object of the present invention is to provide a vehicle battery which can improve heating efficiency.

To solve the problem, in a vehicle battery of the present invention, a one battery module, another battery module, and heater modules are arranged below a floor panel of a vehicle. The other battery module is adjacent to the one battery module in a front-rear direction of the vehicle, and is formed to have a greater height than that of the one battery module. In addition, the heater modules configured to heat the one battery module are provided in front of and behind the one battery module in the front-rear direction of the vehicle.

### BRIEF DESCRIPTION OF DRAWINGS

[Fig. 1] Fig. 1 is a side view of a vehicle showing a state where a battery pack according to an embodiment of the present invention is placed below a floor panel.
[Fig. 2] Fig. 2 is a plan view corresponding to Fig. 1, which shows a state where a floor panel is dismantled.
[Fig. 3] Fig. 3 is an enlarged view of the battery pack shown in Fig. 2.
[Fig. 4] Fig. 4 is a schematic perspective view of the battery pack according to the embodiment of the present invention.
[Fig. 5] Fig. 5 is a schematic perspective view showing a second battery module according to the embodiment of the present invention.

### DESCRIPTION OF EMBODIMENTS

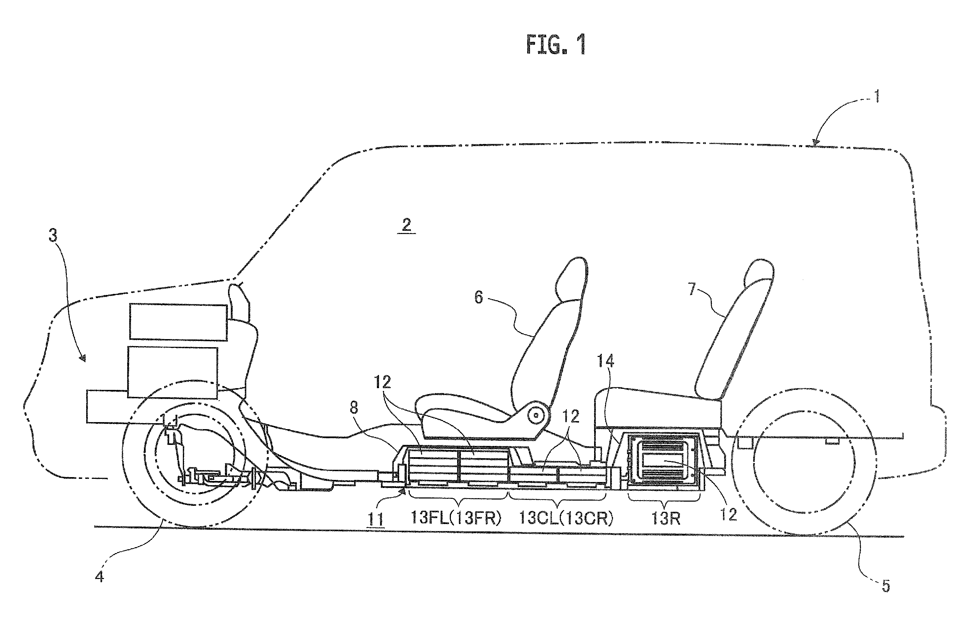

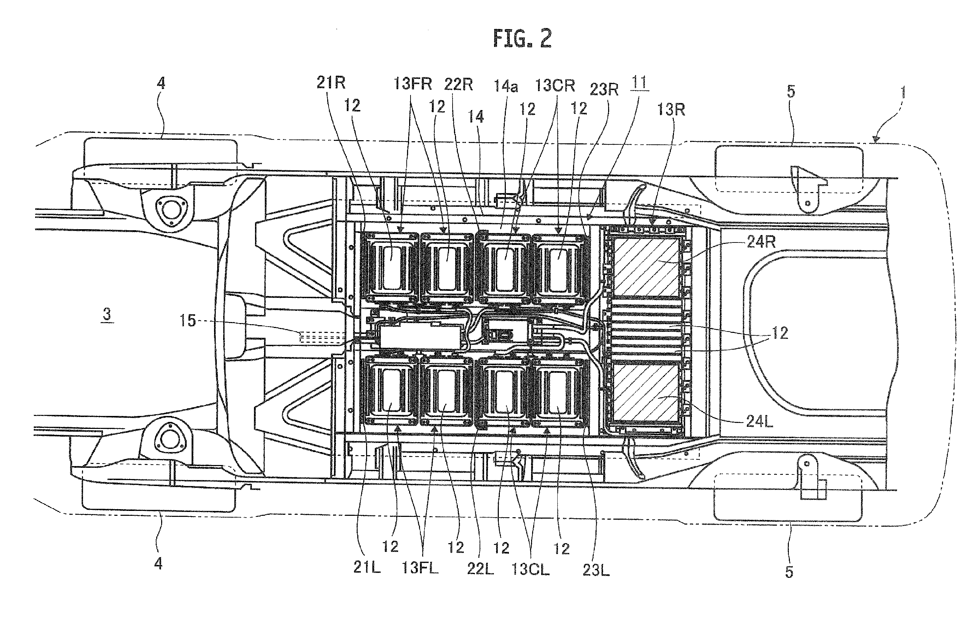

First, a battery pack shown in Figs. 1 to 3 will be described. In Figs. 1 and 2, reference numeral 1 denotes a vehicle body, reference numeral 2 denotes a vehicle cabin, reference numeral 3 denotes a motor room where an electric propulsion motor is mounted, reference numeral 4 denotes left and right front wheels, reference numeral 5 denotes left and right rear wheels, reference numeral 6 denotes front seats, reference numeral 7 denotes rear seats, reference numeral 8 denotes a floor panel, and reference numeral 11 denotes a battery pack.

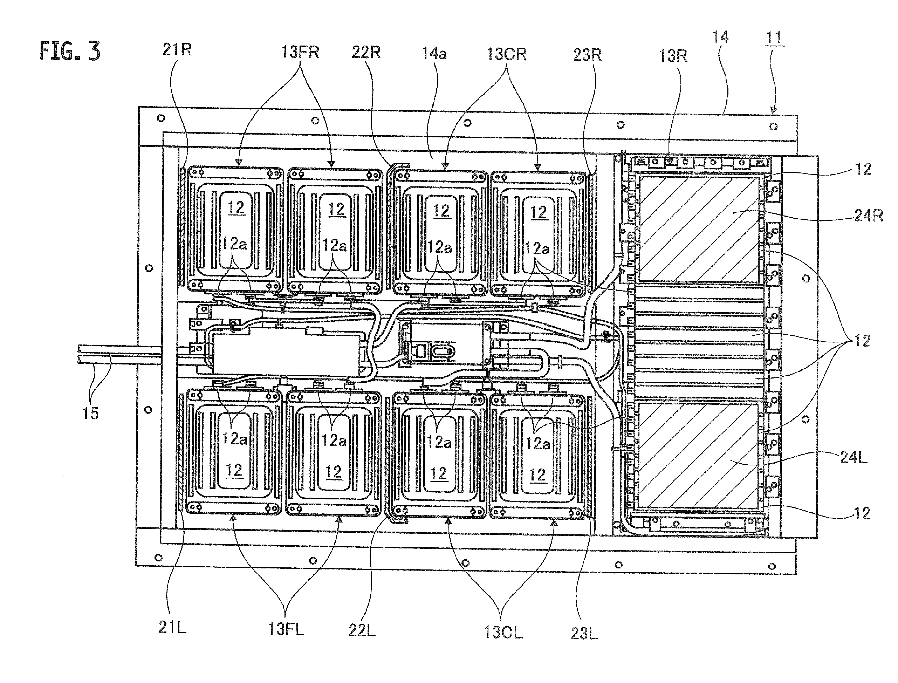

The battery pack 11 is formed into a single unit from: first battery modules 13FL, 13FR (other battery modules) placed on a front side in a front-rear direction of a vehicle; second battery modules 13CL, 13CR (one battery modules) placed on a center side in the front-rear direction of the vehicle; and a third battery module 13R (the other battery module) placed on a rear side in the front-rear direction of the vehicle. The battery modules 13FL, 13FR, 13CL, 13CR, 13R are placed below the floor panel 8 in a state where the battery modules are housed inside a battery pack case 14 shown in Fig. 3.

To be more precise, as shown in Figs. 1 and 2, the battery pack 11 includes: the first battery modules 13FL, 13FR placed below the left and right front seats 6; the third battery module 13R placed below the left and right rear seats 7; and the second battery modules 13CL, 13CR placed immediately below the floor panel 8 between the left and right front seats 6 and the left and right rear seats 7.

As shown in Figs. 1 to 3, the front left first battery modules 13FL are two parallel battery modules placed on the front and rear sides, respectively. Each battery module includes four battery shells 12 stacked in a horizontally long state and in the vertical direction. Similarly, the front right first battery modules 13FR are two parallel battery modules placed on the front and rear sides, respectively. Each battery module includes four battery shells 12 stacked in the horizontally long state and in the vertical direction.

As shown in Figs. 1 to 3, the rear third battery module 13R includes numerous battery shells 12 stacked in a vertically long state and in a vehicle width direction in such a manner as to have a length substantially equal to the entire length of the rear seats 7.

As shown in Figs. 1 to 3, the center left second battery modules 13CL are two parallel battery modules placed on the front and rear sides, respectively. Each battery module includes two battery shells 12 stacked in the horizontally long state and in the vertical direction. Similarly, the second battery modules 13CR on the center right side are two parallel battery modules placed on the front and rear sides, respectively. Each battery module includes two battery shells 12 stacked in the horizontally long state and in the vertical direction.

As shown in Fig. 3, the first battery modules 13FL, 13FR are placed such that electrode terminals 12a of the battery shells 12 constituting the first battery modules 13FL on the left side are opposed to electrode terminals 12a of the battery shells 12 constituting the first battery modules 13FR on the right side (i.e., such that all the electrodes are directed toward the center side in the vehicle width direction).

In the meantime, as shown in Fig. 3, the third module 13R is arranged such that all electrode terminals 12a of the battery shells 12 are directed to the front of the vehicle.

Moreover, as shown in Fig. 3, the center left and right second battery modules 13CL, 13CR are arranged such that electrode terminals 12a of the battery shells 12 constituting the second battery modules 13CL on the left side are opposed to electrode terminals 12a of the battery shells 12 constituting the second battery modules 13CR on the right side (i.e., such that all the electrodes are directed toward the center side in the vehicle width direction).

Meanwhile, as shown in Figs. 2 and 3, all the electrode terminals 12a of the battery cells 12 constituting the battery modules 13FL, 13FR, 13CL, 13CR, and 13R are connected to motor feed lines 15 from the electric motor (an inverter) in the motor room 3 via power cables. The power cables are wired in a central space in the vehicle width direction between the front left and right first battery modules 13FL, 13FR and in a central space in the vehicle width direction between the center left and right second battery modules 13CL, 13CR.

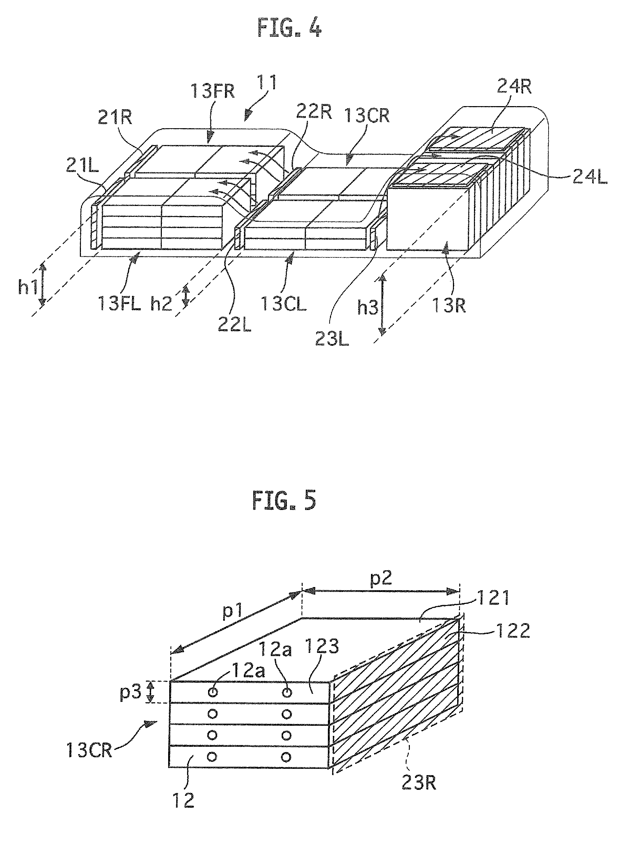

Fig. 4 is a schematic perspective view of the battery shells. The battery shells are designed to satisfy h3>h1>h2 where: h1 denotes a height of the first battery modules 13FL, 13FR (hereinafter also referred to as the first battery modules 13F) when mounted on the vehicle; h2 denotes a height of the second battery modules 13CL, 13CR (hereinafter also referred to as the second battery modules 13C) when mounted on the vehicle; and h3 denotes a height of the third battery module 13R when mounted on the vehicle.

The first battery modules 13F are located below the left and right front seats 6 while the third battery module 13R is located below the left and right rear seats 7. Accordingly, by setting the aforementioned heights h1 and h3 greater than the height h2, a space below the seats in the vehicle cabin 2 can be efficiently used as a space for mounting the battery shells 12. Thus, the numerous batteries can be mounted without losing the comfort of the vehicle cabin 2. In addition, since the height h3 is greater than the height h1, a seat surface of a rear sheet 32R in the vehicle cabin 2 is set higher than a seat surface of a front seat 32F. This setting can secure good fields of view for passengers on the left and right rear seats 7.

In this embodiment, the total number of the battery shells 12 in the first battery modules 13F and the second battery modules 13C is equal to the total number of the battery shells 12 in the third battery module 13R. Meanwhile, in the plan view of the vehicle, the area occupied by the third battery module 13R is smaller than the area occupied by the first battery modules 13F and the second battery modules 13C.

As a consequence, the position of the center of gravity of the battery pack 11 is located relatively closer to the rear of the vehicle in the light of the front-rear direction of the vehicle. Since the electric propulsion motor and the like are placed at the front of the vehicle, the weight distribution of the entire vehicle can be brought closer to the center position in the light of the front-rear direction by placing the position of the center of gravity of the battery pack 11 in a relatively rear portion of the vehicle. Thus, it is possible to secure stability of behaviors of the vehicle.

Now, a configuration of the battery shell 12 will be described. Fig. 5 is a schematic diagram showing the second battery module. Each battery shell 12 is formed substantially in a rectangular parallelepiped and provide with long sides p1, short sides p2, and height sides p3. Lengths of the sides are designed to satisfy a dimensional relation of p1>p2>p3. The battery shell 12 is provided with: plane surfaces 121 each surrounded by the long sides p1 and the short sides p2; long side surfaces 122 each surrounded by the long sides p1 and the height sides p3; and short side surfaces 123 each surrounded by the short sides p2 and the height sides p3. In addition, the electrode terminals 12a are located on one of the short side surfaces 123.

The first battery modules 13F and the second battery modules 13C are arranged in such a direction that the short sides p2 of the battery shells 12 extend in the front-rear direction of the vehicle. The first battery modules 13F and the second battery modules 13C are the battery modules that are arranged in a region where a restriction in the height direction is relatively greater than a restriction in the width direction. Accordingly, even when the battery modules are arranged such that the long sides p1 extend in the vehicle width direction, it is still possible to secure the spaces between the left and right battery modules and to achieve the wiring and the like easily. In addition, an integration density of the battery shells 12 can be increased by arranging the short sides p2 in the front-rear direction of the vehicle. Meanwhile, the heights of the battery modules can be finely adjusted by arranging the height sides p3, which are the shortest, in the vertical direction of the vehicle.

Although various restrictions in the vertical direction of the vehicle may be present depending on vehicles, the heights of the battery shells 12 are adjustable depending on the mode of stacking the battery shells 12 when the structures of the battery shells12 are in common. Accordingly, it is possible to mount the battery shells 12 efficiently by setting the unit of adjustment smaller.

The third battery module 13R is arranged in such a direction that the height sides p3 of the battery shells 12 extend in the vehicle width direction. Thus, the number of stacked battery shells 12 can be finely adjusted so that the numerous battery shells 12 can be arranged while making efficient use of the space below the left and right rear seats 7.

### <Concerning Thin Heater Modules>

Next, thin heater modules (heater modules) configured to heat the battery modules for doing things such as preventing the battery modules not in use from freezing will be described below on the basis of Figs. 2 and 3. Note that in Figs. 2 and 3, the thin heater modules are hatched for the convenience of providing clear illustration. Each thin heater module is a so-called PTC heater, which is heated to a predetermined temperature by application of electricity and then to change a resistance value therein so as to maintain the temperature. By combining the PTC heater with a heat equalizing plate configured to equally distribute the heat, the thin heater module can evenly heat a range of a preset area. Here, the heater itself may employ a method of wiring a nichrome wire in a meandering manner, a method of circulating hot water along a predetermined flow path, or the like. However, no specific limitation is imposed on what method the heater should employ.

As indicated with hatched regions in Fig. 5, thin heater modules 23L, 23R are provided adjacent to the long side surfaces 122 of the battery shells 12. Specifically, the heat needs to be transferred evenly to the stacked battery shells 12 in order to heat the entire battery modules efficiently. If the thin heater modules are provided close to the plane surfaces 121, only the upper and lower ends of the stacked battery shells 12 adjacent to the thin heater modules are heated whereas the battery shells 12 stacked in the middle in the vertical direction are insufficiently heated. As a consequence, it is difficult to achieve stabilization of performances thereof.

Meanwhile, all the battery shells 12 can be heated when the thin heater modules are provided close to the short side surfaces 123. However, there is a problem of low heating sufficiency since the area facing the thin heater modules is small.

Accordingly, in this embodiment, all the battery shells 12 are evenly heated and the heating efficiency is hence improved by providing the thin heater modules 23L, 23R in such a manner as to face the long side surfaces 122.

As described previously, each of the front left and right first battery modules 13FL, 13FR includes the four stacked battery shells 12 and has a large heat capacity. On the other hand, as described previously, each of the center left and right second battery modules 13CL, 13CR includes the two stacked battery shells 12, has a small heat capacity, and easily cools down.

Accordingly, in this embodiment, thin heater modules 21L, 21R are provided only in front of the front left and right first battery modules 13FL, 13FR as shown in Figs. 2 and 3. In the meantime, thin heater modules 22L, 22R are provided in front of the center left and right second battery modules 13CL, 13CR, and the thin heater modules 23L, 23R are also provided behind the second battery modules 13CL, 13CR. A reason for placing the thin heater modules 21L, 21R only in front of the first battery modules 13 is that the front side is easily influenced by a traveling wind and the like, and is therefore relatively easy to cools down. In addition, it is also possible to reduce costs by defining smaller regions for providing the thin heater modules.

As indicated with arrows in Fig. 4, the air warmed by the thin heater modules 22 for heating the second battery modules 13C moves upward. The warmed air can heat the first battery modules 13F as well. Similarly, the air warmed by the thin heater modules 23 for heating the second battery modules 13C moves upward. The warmed air can heat the third battery module 13R as well. In other words, since the second battery modules 13C are located in a position lower than the other battery modules, this positional relation is utilized for heating the other battery modules as well.

The stacking direction of the third battery module 13R at the rear is different from the stacking direction of the first battery modules 13F and the second battery modules 13C. Here, since the long side surfaces 122 are located on an upper surface side of the vehicle, thin heater modules 24 are also placed on the upper surface side of the vehicle. In this case, the third battery module 13R has an even larger number of stacked battery shells 12 than the front left and right first battery modules 13FL, 13FR, and also has the largest heat capacity. Accordingly, the temperature drops even less in the third battery module 13R. However, side surface sides of the third battery module 13R in the vehicle width direction are relatively easily influenced by a traveling wind and the like whereas a portion around the center of the third battery module 13R in the vehicle width direction cools down least. Accordingly, thin heater modules 24L, 24R are provided only on upper parts of the third battery module 13R at the rear in regions at two ends in the stacking direction of the battery shells 12 therein.

To be more precise, when three regions are defined by division in the stacking direction, the thin heater modules 24L, 24R are located in the regions at the two ends and no thin heater modules are located in the central region. Though the regions for locating the thin heater modules are narrowed by the above-described configuration, it is still possible to heat the third battery module 13R efficiently as a whole. In the meantime, it is possible to reduce costs by defining smaller regions for locating the thin heater modules.

The thin heater modules 21L, 21R are closely placed upright in front of the front left battery modules 13FL and the front right battery modules 13FR, respectively, and are attached to a battery module mounting surface 14a of the battery pack case 14.

The thin heater modules 22L, 22R are closely placed in front of the center left battery modules 13CL and the center right battery modules 13CR, respectively, and are attached to the battery module mounting surface 14a of the battery pack case 14. The thin heater modules 23L, 23R are closely placed behind the center left battery modules 13CL and the center right battery modules 13CR, respectively, and are attached to the battery module mounting surface 14a of the battery pack case 14.

The thin heater modules 24L, 24R are closely located above the two ends in the battery-shell stacking direction of the rear battery module 13R, respectively, and are attached to the battery module mounting surface 14a of the battery pack case 14.

In the meantime, the battery power cables are wired in the central space in the vehicle width direction between the front left and right first battery modules 13FL, 13FR, and in the central space in the vehicle width direction between the center left and right second battery modules 13CL, 13CR. Accordingly, electrode terminals of the thin heater modules 21L, 21R, 22L, 22R, 23L, 23R, 24L, 24R are preferably placed close to the central space in the vehicle width direction between the front left and right first battery modules 13FL, 13FR, and in the central space in the vehicle width direction between the center left and right second battery modules 13CL, 13CR.

For this reason, the electrodes of the thin heater modules 21L, 21R to be closely placed upright in front of the front left battery modules 13FL and the front right battery modules 13FR are placed respectively at end portions of the thin heater modules 21L, 21R that are close to each other. Meanwhile, the electrodes of the thin heater modules 23L, 23R to be closely placed upright behind the center left battery modules 13CL and the center right battery modules 13CR are also placed respectively at end portions of the thin heater modules 23L, 23R that are close to each other.

As a consequence, the thin heater modules 21L, 21R and the thin heater modules 23L, 23R can be formed in flat plate shapes as shown in Figs. 2 and 3.

Here, a reason why the electrode terminals of the thin heater modules 21L, 21R can be placed as described above is that there are no adjacent battery modules in front of the front left battery modules 13FL and the front right battery modules 13FR, so that it is possible to secure the space for locating the electrode terminals around the end portions of the thin heater modules 21L, 21R that are close to each other.

In the meantime, a reason why the electrode terminals of the thin heater modules 23L, 23R can be located as described above is that there are no adjacent battery modules behind the center left battery modules 13CL and the center right battery modules 13CR, so that it is possible to secure the space for locating the electrode terminals around the end portions of the thin heater modules 23L, 23R that are close to each other.

Now, operation and effects of this embodiment will be described below.
(1) Provided are the second battery modules 13C (the one battery modules) located below the floor panel 8 of the vehicle; the first battery modules 13F and/or the third battery module 13R (the other battery modules) located adjacent to the second battery modules 13C in the front-rear direction of the vehicle and having the greater heights than that of the second battery modules 13C; and the thin heater modules 22 , 23 (the heater modules) located upright in front of and behind the second battery modules 13C in the front-rear direction of the vehicle in such a manner as to face the side surfaces of the second battery modules 13C and configured to heat the second battery modules 13C.

In other words, the second battery modules 13C have the smaller height and smaller volumes than the other battery modules 13F, 13R. Hence, the secondary battery modules 13C have smaller thermal capacities, and are therefore easy to cool down. In this regard, it is possible to secure the heating performance by placing the thin heater modules 22, 23 both at the front and at the rear in the front-rear direction of the vehicle. Although this embodiment has described the configuration of the battery pack 11 including the first battery modules 13F as well as the third battery module 13R, only the first battery modules 13F or the third battery module 13R may be provided instead.

For example, the battery pack 11 may be formed as a combination of the first battery modules 13F and the second battery modules 13C, or as a combination of the second battery modules 13C and the third battery module 13R. In other words, the present invention is not limited only to the configuration including all of the first to third battery modules.

(2) Below the floor panel 8 of the vehicle, provided are the first battery modules 13F located below the front seats and having the first height h1, the second battery modules 13C located below the floor panel 8 at footrests for the rear seats placed between the front seats and the rear seats and having the second height h2 lower than the first height h1, and the third battery module 13R located below the rear seats and having the third height h3 greater than the first height h1, which are arranged in this order. Moreover, there are provided the thin heater modules 22, 23, which are provided upright in front of and behind the second battery modules 13C in the front-rear direction of the vehicle in such a manner as to face the side surfaces of the second battery modules 13C, and are configured to heat the second battery modules 13C.

In other words, although the second battery modules 13C are located at the central part of the battery pack 11, the secondary battery modules 13C have smaller volumes than the other battery modules 13F, 13R, and therefore have the smaller heat capacities, and are easy to cool down. Accordingly, it is possible to secure the heating performance by placing the thin heater modules 22, 23 both at the front and at the rear in the front-rear direction of the vehicle. Here, since the second battery modules 13C are located below the floor panel 8 at the footrests for the rear seats placed between the front seats and the rear seats, it is hard to secure the height direction therefor. In this regard, the battery shells 12 can be arranged efficiently by stacking the battery shells 12 along the vertical direction of the vehicle and aligning the long side surfaces 122 with the vehicle width direction. In a place where there is a restriction in the height direction, the thin battery heaters 22, 23 can be arranged sideways instead of above, thereby achieving efficient arrangement while avoiding other restrictions.

(3) The thin heater modules 21 are placed in front of the first battery modules 13F in the front-rear direction of the vehicle.

Specifically, the first battery modules 13F placed at the front side of the vehicle are easily influenced by a traveling wind, and are therefore easy to cool down. As described above, it is possible to reduce costs while securing the heating performance by locating the thin heater modules only in the positions that make the thin heater modules easy to cool down. Here, each first battery module 13F has a greater volume than each second battery module 13C and therefore has a greater heat capacity. Accordingly, the vehicle's rear side of the first battery module 13 is relatively uneasy to cools down. Hence, a sufficient heating performance can be achieved just by providing the thin heater modules 21 only at the front side of the vehicle. The first battery modules 13F are located below the front seats, and it is hard to secure the height direction therefor. In this regard, the battery shells 12 can be arranged efficiently by stacking the battery shells 12 along the vertical direction of the vehicle and aligning the long side surfaces 122 with the vehicle width direction.

(4) The thin heater modules 24 are placed above the third battery module 13R in the vertical direction of the vehicle, and in the regions at the two ends of the third battery module 13R while excluding the central region thereof in the vehicle width direction.

Specifically, the third battery module 13C is located below the rear seats and has a relatively moderate restriction in the vertical direction. In this regard, the thin battery heaters 24 can be placing at portions where the restriction is moderate, thereby achieving efficient arrangement while avoiding other restrictions. In the meantime, it is possible to secure a sufficient space in the vehicle width direction and to arrange the battery shells 12 efficiently by stacking the battery shells 12 in the vehicle width direction and locating the thin heater modules 24 thereabove. Meanwhile, the third battery module 13R has a larger volume than the first and second battery modules 13F, 13C and therefore has a larger heat capacity as well. In particular, the center of the third battery module 13R in the vehicle width direction is not easily influenced by outside air, and is therefore uneasy to cools down. Accordingly, a sufficient heating performance can be obtained while reducing costs by means of locating the thin heater modules 24 in the two end regions excluding the central region in the vehicle width direction. Moreover, it is possible to make effective use of the space below the seats in the vehicle cabin 2 as the space for mounting the battery shells 12, and thereby to mount the numerous batteries without losing the comfort of the vehicle cabin 2.

(5) Each of the battery modules 13F, 13C, 13R is formed by stacking multiple battery shells 12 in the shape of a rectangular parallelepiped having three sides. The thin heater modules 21, 22, 23, 24 are provided upright in such a manner as to face the side surfaces including the sides along the stacking directions of the battery modules 13.

In other words, all the battery shells 12 can be heated evenly by providing the thin heater modules 21, 22, 23, 24 in such a manner as to face the side surfaces including the sides extending in the stacking directions. In addition, the heating efficiency can be improved by heating the inside of the battery pack case 14.

(6) Each battery shell 12 is formed in the shape of the rectangular parallelepiped having the long sides p1, the short sides p2, and the height sides p3 shorter than the long and short sides, and the stacking direction is the direction along the height sides p3. The thin heater modules 21, 22, 23, 24 are provided upright in such a manner as to face the long side surfaces 122 which includes the long sides p1.

Specifically, by stacking the battery shells 12 in the direction along the shortest height sides p3, it is possible to set the length adjustment finely in the direction along the height sides p3 of the battery modules 13, and thereby to efficiently mount the battery modules 13 on the vehicle.

In addition, by providing the thin heater modules 21, 22, 23, 24 upright in such a manner as to face the long side surfaces 122, it is possible to heat all the battery shells 12 evenly, and to improve the heating efficiency at the same time.

It is to be noted that the entire contents of Japanese Patent Application No. 2011-054091 (date of filing: March 11, 2011) and Japanese Patent Application No. 2012-028464 (date of filing: February 13, 2012) are incorporated herein by reference.

Although the contents of the present invention have been described with reference to the embodiment, it is to be understood that the present invention is not limited only to the relevant descriptions. It is obvious to those skilled in the art that various modifications and alterations are possible.

### INDUSTRIAL APPLICABILITY

In the vehicle battery of the present invention, the one battery modules have the smaller height and are therefore smaller in size than the other battery modules. Accordingly, it is possible to ensure the performance of heating the one battery modules by placing the heater modules both at the front and at the rear thereof in the front-rear direction of the vehicle.

### REFERENCE SIGNS LIST

- 1: vehicle body
- 2: vehicle cabin
- 3: motor room
- 4: left and right front wheels
- 5: left and right rear wheels
- 6: front seat
- 7: rear seat
- 8: floor panel
- 11: battery pack
- 12: battery shell
- 12a: battery electrode terminal
- 13FL: front left battery module
- 13FR: front right battery module
- 13CL: center left battery module
- 13CR: center right battery module
- 13R: rear battery module
- 14: battery pack case
- 14a: battery module mounting surface
- 15: motor feed line
- 21L, 22R, 22L, 22R, 23L, 23R: thin heater module (heater module)

## Claims

1. A vehicle battery comprising:
a one battery module placed below a floor panel of a vehicle;
another battery module placed adjacent to the one battery module on a side in a front-rear direction of the vehicle, and having a greater height than a height of the one battery module; and
heater modules located in front of and behind the one battery module in the front-rear direction of the vehicle in such a manner as to face side surfaces of the one battery module, the heater modules being configured to heat the one battery module.

2. A vehicle battery comprising:
a battery module located below a floor panel of a vehicle, including
a first battery module located below a front seat and having a first height,
a second battery module located below the floor panel of the vehicle at a rear seat footrest between the front seat and the rear seat, and having a second height smaller than the first height, and
a third battery module located below the rear seat and having a third height greater than the first height,
the first battery module, the second battery module, and the third battery module being sequentially arranged from a front side of the vehicle; and
heater modules located in front of and behind the second battery module in a front-rear direction of the vehicle in such a manner as to face side surfaces of the second battery module, the heater modules being configured to heat the second battery module.

3. The vehicle battery according to claim 2, wherein
another heater module different from the heater modules is further located in front of the first battery module in the front-rear direction of the vehicle.

4. The vehicle battery according to claim 2 or 3, wherein
still other heater modules are located above the third battery module in a vertical direction of the vehicle in two end regions excluding a central region in a vehicle width direction.

5. The vehicle battery according to any one of claims 2 to 4, wherein
each battery module is formed by stacking a plurality of battery shells each in a shape of a rectangular parallelepiped having three sides, and
each heater module is located in such a manner as to face a side surface of the corresponding battery module including a side extending in a stacking direction of the battery modules.

6. The vehicle battery according to claim 5, wherein
each battery shell is formed in the shape of the rectangular parallelepiped having a long side , a short side , and a height side shorter than the long and short sides,
the stacking direction is a direction along the height side, and
each heater module is located in such a manner as to face a side surface including the long side.
